# EUROPEAN PATENT SPECIFICATION

(11) **EP 2 554 230 B1**
(45) Date of publication and mention of the grant of the patent: **23.09.2015**
(21) Application number: 12177933.4
(22) Date of filing: 26.07.2012
(51) Int. Cl.: B01D 24/22, B01D 24/46

(54) **Method of cleaning the filter medium of a gravity sand filter and a filter system**
Verfahren zum Reinigen des Filtermittels eines Gravitätssandfilters und Filtersystem
Procédé de nettoyage du support de filtre d'un filtre à sable à gravité et un système de filtre

(30) Priority: 01.08.2011 CZ 20110468
(43) Date of publication of application: 06.02.2013
(73) Proprietor: Topol, Jan, Prague 8 180 00 (CZ)
(72) Inventor: Topol, Jan, Prague 8 180 00 (CZ)
(74) Representative: Hano, Christian

(56) References cited:
- DE-C- 963 417
- FR-A1- 2 910 460
- JP-A- 54 096 875
- SCHERFIG J ET AL: "TWO-STAGE BACKWASH SYSTEM FOR WASTEWATER FILTERS USING PRIMARY AND FINAL EFFLUENT", JOURNAL OF THE WATER POLLUTION CONTROL FEDERATION, WATER POLLUTION CONTROL FEDERATION. WASHINGTON, US, vol. 61, no. 11 / 12, 1 November 1989 (1989-11-01), pages 1651-1657, XP000174934,

## Description

### Technical field

The invention deals with biological wastewater treatment in domestic wastewater treatment plants, particularly with tertiary cleaning, the task of which is to enhance undissolved substances at the outflow of the treatment plant, and thus to improve quality of treated water.

### Background art

Depending on the size of the treatment plant, the design flow through the wastewater treatment plant and filtration quality requirements, different types of filtering systems are used. There are 3 types of filtration known so far. It is a sand, gravity, or pressure filtration, a textile filtration utilising drum filters, and a membrane-type filtration. The most expensive and the first-quality filtration is of the membrane type, which is used for all types of treatment plants and which can practically collect all the undissolved substances, including bacteria. But it is not always necessary to use this operation-intensive and investment-demanding type of filtration for wastewater treatment. Thanks to the small size of the system, the textile filtration is usable for treatment plants with a capacity over 100 m³ per day. The pressure sand filtration is used for various capacities of treatment plants and types of filters with various efficiency levels. For the smallest sizes with capacities equal to or larger than approx. 3 m³ per hour, common pool filter systems are used. The acquisition cost is low, but the installation with a preceding accumulation tank is complicated, and furthermore, these filters need regular servicing. Gravity sand filters are either underground, or of a water-supply type. The underground filters are simple and can be even used in the smallest treatment plants. Their disadvantage is their considerable need of space, requiring about 5 m² per person; furthermore, they are expensive and cannot be regenerated by backwashing if clogged with sludge. The gravity water-supply sand filters comprise a water tank and a permeable divider on which a layer of sorted sand lies, with its usual granularity being 1-3 mm. Water is brought to the surface of the sand layer that is always under water. Water passes through the sand layer, being thus filtered. This filter needs to be cleaned in regular intervals or if a reduced flow is indicated. The cleaning process consists in bringing in turns compressed air and water to the area of the divider. This frees turbidity accumulated in the sand layer to water above the sand filter, and this water and turbidity are then drawn off. Owing to complexity of the control of this gravity sand filter, the operation of which requires electrical valves, manometers, level sensors, control units and so on, this filter is not actually used for final treatment of wastewater in small wastewater treatment plants.

DE 963 417 C discloses a fluid filter having a filter bottom provided with equally distributed dip pipes which protrude into a pressure tank arranged underneath the filter bottom. Between the filter bottom and the filter medium at least one gravel support layer is arranged, the grain size of the gravel being larger than the grain size of the filter medium and than the inner diameter of the dip pipes.

### Disclosure of invention

The above mentioned shortcomings are eliminated by a filter system comprising the features of claim 1 and a method comprising the features of claim 3.

The advantage of the solution as per the invention is primarily in the simplicity of the design without a need of electric or manual closing valves. High reliability of the filter medium cleaning is achieved here alongside with the low cost. This solution of tertiary treatment can thus be even used in the smallest domestic wastewater treatment plants, where so far only underground sand filters or expensive and operation-intensive membrane filters could be used. The tertiary treatment as per the invention is an integral part of small domestic wastewater treatment plants as well, from which purified wastewater can be obtained in the quality enabling its further wide-ranging utilisation.

### Brief description of drawings

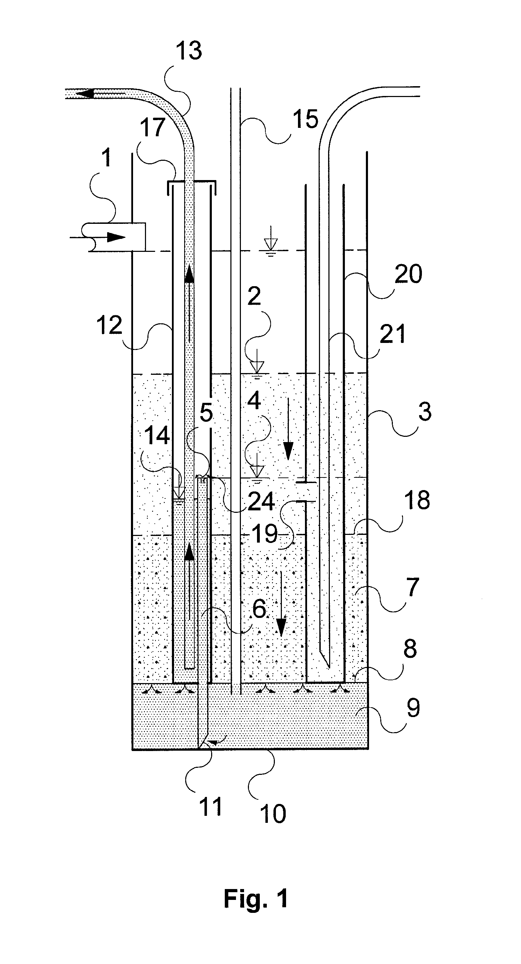

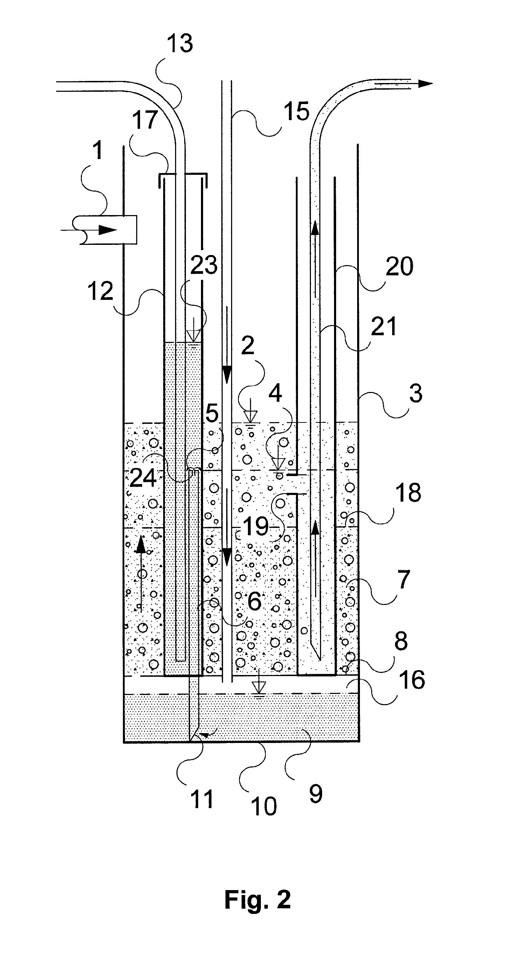

The enclosed drawings include Fig. 1 illustrating the process of pre-treated wastewater filtration and Fig. 2 the process of cleaning the gravity, passed-through sand filter as per the invention.

### Description of preferred embodiment

Pre-treated wastewater flows in via the inlet **1** to the sand filter vessel **3** to the current level **2** of water. The current level **2** of water fluctuates during the filtration depending on the inflow to the sand filter vessel **3** and on the degree of turbidity in sand of the filter medium **7**, from the level of the inlet **1** up to the minimum level **4**, which is given by the height of the outlet **5** of the filtered water outlet pipe **6** to the filtered water tank **12**. The filtered water permeates through the filter medium **7**, made of e.g. sorted sand of granularity circa 1-4 mm, through the permeable divider **8** to the filtered water space **9**, which is delimited by the bottom **10** of the sand filter vessel **3** and the divider **8,** while turbidity remains accumulated on the surface and in the sub-surface layer of the filter medium **7**. Water is pushed from the filtered water space **9** by hydrostatic excess pressure, formed by the difference of the levels **2** and **4**, to the outlet pipe **6**. The outlet pipe **6** has an inflow **11** located near the bottom **10** of the sand filter vessel **3** in order the volume of filtered water space **9** above the inflow **11** to be as large as possible. Filtered water flows out of the filtered water space **9** via the outlet pipe **6** to the filtered water tank **12.** Depending on the changing hydraulic condition of the sand filter, the level **14** of water in the filtered water tank **12** fluctuates below or above the minimum level **4**, being, however, always below the current level **2** of water in the sand filter vessel **3**. During the filtration process sludge accumulates in the filter medium **7,** reducing thus its flow. This also results in the increase in the difference of water levels between the current level **2** of water above the filter medium **7** and the level **14** in the filtered water tank **12**. Therefore, the filter medium **7** must be cleaned then. This process, which is called de-sludging, is controlled either in regularly set intervals, or it occurs in connection to the technological process of biological treatment in the wastewater treatment plant.

Since compressed air is usually available in wastewater treatment plants, the filter medium **7** is preferably backwashed by compressed air that is brought to the filtered water space **9** under the divider **8**. At the beginning of backwashing when the filter medium **7** is clogged with sludge, increased excess pressure of air needs to be provided under the divider **8** to penetrate the worse-permeable layer of sand and settled sludge.

In order a sufficient excess pressure could occur and persist for the required time in the filtered water space **9** under the divider **8**, which is necessary for even permeation of compressed air through all the openings of the divider **8** to the layer of the filter medium **7**, air leakage must be prevented by the outlet pipe **6**. This is achieved when filtered water flows in the outlet pipe **6** near the bottom of the filtered water space **9** and compressed air is, by contrast, brought right under the divider **8**, where an air layer forms that gradually pushes filtered water out of the filtered water space **9** to the outlet pipe **6**. The flow of the outlet pipe **6** is limited by the calibrated opening **24** to release the filter medium **7** together with settled sludge before compressed air pushes all water out of the filtered water space **9** via the outlet pipe **6**. The suitable elected profile of the outlet pipe **6** limits the water flow from the filtered water space **9** even without calibrated opening **24**. After the release of settled sludge, pressure in the filtered water space **9** and all compressed air passes via the divider **8** to the filter medium **7**, and thus water also stops flowing out of the filtered water space **9** to the filtered water tank **12**. If resistance of settled sludge in the filter medium **7** is so big that all water is pushed out of the filtered water space **9** to the filtered water tank **12**, then it is necessary for this volume of water to be sufficient to cause water rising in the filtered water tank **12** above the current level **2** of water in the sand filter vessel **3**. This means that the volume of the filtered water space **9** must be equally large or larger than the volume of the filtered water tank **12**. Hydrostatic excess pressure of the water column in the filtered water tank **12** thus acts against leakage of water and subsequently of compressed air from the filtered water space **9** via the outlet pipe **6**, also in the event that all water was pushed out of the filtered water space **9**. Therefore, to prevent the aeration process of the filter medium **7** from stopping in the situation when grains of sand had not been released before the air layer **16** reached the inflow to the outlet pipe **6**, it is necessary for the filtered water pushed out of the filtered water space **9** to the filtered water tank **12** to reach the safe level **23** which during and at the end of the desludging process must be always higher than the current level **2** of water in the sand filter vessel **3**. The closing of the upper part of filtered water tank **12** with a cap **17** will advantageously still more extend the time necessary for penetrating the turbid filter medium **7** in the manner that first the entire content of the filtered water tank **12** must be pushed out of the wastewater treatment plant via the pipe of the filtered water air-lift pump **13** and only then air can leave the filtered water space **9**.

Before the process of desludging the filter medium **7** filtered water stops being drawn off with the filtered water pump **13**. Via the compressed air inlet **15** compressed air is brought to the filtered water space **9** under the divider **8**, where air forms a continuous air layer **16** under the entire divider **8**, and air bubbles rise upwards via openings or special jets in the divider **8** through the filter medium **7**. This moves grains of sand and releases sludge which accumulates in the water layer above the surface **18** of the filter medium **7**. Turbid water flows away via the inflow **19**, which is located at the level between the surface **18** of the filter medium **7** and the minimum level **4**, to the turbid water tank **20** which houses the turbid water pump **21**. This turbid water is drawn back to the inflow to the wastewater treatment plant. The filtered water pump **13** and the turbid water pump **21** are preferably air-lift pumps.

## Claims

1. A filter system comprising a sand filter vessel (3) with a divider (8) permeable for water, a filter medium (7) placed on the divider (8), an outlet pipe (6) leading from a filtered water space (9) under the divider (8) to a filtered water tank (12), a filtered water pump (13) and a compressed air inlet (15) leading under the divider (8), **characterised in that**
- the compressed air inlet (15) is located right under the divider (8),
- the outlet pipe (6) has an inflow (11) near the bottom (10) of the sand filter vessel (3) and an outflow (5) to the filtered water tank (12) at a height which determines the minimum level (4) of water, the outflow (5) of the outlet pipe (6) having a selected profile or a calibrated opening (24) to limit the water flow from the filtered water space (9) such that the flow through the outlet pipe (6) is smaller than the flow through the compressed air inlet (15),
- the volume of the filtered water space (9) is at least as large as the volume of the filtered water tank (12).
- a turbid water inflow (19) to a turbid water tank (20) is located above the surface of the filter medium (7) and below the minimum level (4) of water in the sand filter vessel (3).

2. The filter system according to claim 1, **characterised in that** the filtered water pump (13) is an air-lift pump.

3. A method of cleaning a filter medium (7) of a filter system according to claim 1 or 2, wherein the filter medium (7) is placed in the sand filter vessel (3) on the divider (8), under which compressed air is brought, permeating through openings in the divider (8) to the filter medium (7) and on the way to its surface releasing turbidity to the water layer above the filter medium (7), when subsequently turbidity and water are drawn off, **characterised in that** the compressed air is brought right under the divider (8) such that it pushes filtered water out of the space under the divider (8) to a filtered water tank (12), wherein the volume of incoming compressed air per unit of time is larger than the volume of outflowing water pushed to the filtered water tank (12) and wherein, when all water is pushed out from the space under the divider (8), the level of water in the filtered water tank (12) is higher than the level of water in the sand filter vessel (3).

## Patentansprüche

1. Filtersystem, das einen Sandfilterbehälter (3) mit einer für Wasser durchlässigen Trennwand (8), ein auf der Trennwand (8) platziertes Filtermedium (7), ein Auslassrohr (6), das von einem Raum (9) für gefiltertes Wasser unter der Trennwand (8) zu einem Tank (12) für gefiltertes Wasser führt, eine Pumpe (13) für gefiltertes Wasser und einen unter die Trennwand (8) führenden Einlass (15) für komprimierte Luft aufweist, **dadurch gekennzeichnet, dass**
- der Einlass (15) für komprimierte Luft direkt unter der Trennwand (8) angeordnet ist,
- das Auslassrohr (6) einen Zufluss (11) in der Nähe des Bodens (10) des Sandfilterbehälters (3) und einen Ausfluss (5) zu dem Tank (12) für gefiltertes Wasser auf einer Höhe hat, die den minimalen Wasserstand (4) bestimmt,
- der Ausfluss (5) des Auslassrohrs (6) ein gewähltes Profil oder eine kalibrierte Öffnung (24) zur Begrenzung des Wasserstroms aus dem Raum (9) für gefiltertes Wasser derart hat, dass der Strom durch das Auslassrohr (6) kleiner ist als der Strom durch den Einlass (15) für komprimierte Luft,
- das Volumen des Raums (9) für gefiltertes Wasser wenigstens so groß ist wie das Volumen des Tanks (12) für gefiltertes Wasser,
- ein Trübwasserzufluss (19) zu einem Trübwassertank (20) über der Oberfläche des Filtermediums (7) und unter dem minimalen Wasserstand (4) in dem Sandfilterbehälter (3) angeordnet ist.

2. Filtersystem nach Anspruch 1, **dadurch gekennzeichnet, dass** die Pumpe (13) für gefiltertes Wasser eine Airlift-Pumpe ist.

3. Verfahren zum Reinigen eines Filtermediums (7) eines Filtersystems nach Anspruch 1 oder 2, wobei das Filtermedium (7) in dem Sandfilterbehälter (3) auf der Trennwand (8) platziert wird, unter die Druckluft gebracht wird, die durch Öffnungen in der Trennwand (8) zu dem Filtermedium (7) dringt und auf dem Weg zu seiner Oberfläche Trübe in die Wasserschicht über dem Filtermedium (7) freisetzt, wenn anschließend Trübe und Wasser abgezogen werden, **dadurch gekennzeichnet, dass** die Druckluft direkt unter die Trennwand (8) gebracht wird, so dass sie gefiltertes Wasser aus dem Raum unter der Trennwand (8) hinaus zu einem Tank (12) für gefiltertes Wasser drückt, wobei das Volumen an hereinkommender Druckluft pro Zeiteinheit größer ist als das Volumen an hinausströmendem Wasser, das zu dem Tank (12) für gefiltertes Wasser gedrückt wird, und wobei, wenn alles Wasser aus dem Raum unter der Trennwand (8) hinausgedrückt wird, der Wasserstand in dem Tank (12) für gefiltertes Wasser höher ist als der Wasserstand in dem Sandfilterbehälter (3).

## Revendications

1. Système de filtration comprenant un récipient de filtre à sable (3) avec un séparateur (8) perméable à l'eau, un milieu de filtration (7) placé sur le séparateur (8), un tuyau de sortie (6) menant d'un espace d'eau filtrée (9) situé sous le séparateur (8) jusqu'à un réservoir d'eau filtrée (12), une pompe à eau filtrée (13) et une arrivée d'air comprimé (15) menant sous le séparateur (8), **caractérisé en ce que**
- l'arrivée d'air comprimé (15) est située juste en dessous du séparateur (8),
- le tuyau de sortie (6) présente une entrée (11) à proximité du fond (10) du récipient de filtre à sable (3) et un écoulement (5) vers le réservoir d'eau filtrée (12) à une hauteur qui détermine le niveau minimum (4) d'eau, l'écoulement (5) du tuyau de sortie (6) présentant un profil sélectionné ou une ouverture calibrée (24) pour limiter le flux d'eau en provenance de l'espace d'eau filtrée (9) de telle manière que le flux traversant le tuyau de sortie (6) est inférieur au flux traversant l'arrivée d'air comprimé (15),
- le volume de l'espace d'eau filtrée (9) est au moins aussi grand que le volume du réservoir d'eau filtrée (12),
- une entrée d'eau trouble (19) vers un réservoir d'eau trouble (20) est située au-dessus de la surface du milieu de filtration (7) et en dessous du niveau minimum (4) d'eau dans le récipient de filtre à sable (3).

2. Système de filtration selon la revendication 1, **caractérisé en ce que** la pompe à eau filtrée (13) est une pompe à émulsion.

3. Procédé de nettoyage d'un milieu de filtration (7) d'un système de filtration selon la revendication 1 ou 2, dans lequel le milieu de filtration (7) est placé dans le récipient de filtre à sable (3) sur le séparateur (8), en dessous duquel est amené de l'air comprimé qui s'infiltre à travers des ouvertures situées dans le séparateur (8) vers le milieu de filtration (7) et, sur le trajet menant vers la surface dudit milieu, libère de la turbidité dans la couche d'eau située au-dessus du milieu de filtration (7), la turbidité et l'eau étant ensuite retirées, **caractérisé en ce que** l'air comprimé est amené juste en dessous du séparateur (8) de telle manière qu'il pousse l'eau filtrée hors de l'espace situé sous le séparateur (8) vers un réservoir d'eau filtrée (12), dans lequel le volume d'air comprimé entrant par unité de temps est supérieur au volume d'eau d'écoulement poussée vers le réservoir d'eau filtrée (12) et dans lequel, lorsque toute l'eau est poussée hors de l'espace situé sous le séparateur (8), le niveau d'eau dans le réservoir d'eau filtrée (12) est supérieur au niveau d'eau dans le récipient de filtre à sable (3).
